# EUROPÄISCHE PATENTANMELDUNG

(11) **EP 4 756 248 A1**
(43) Veröffentlichungstag der Anmeldung: **10.06.2026**
(21) Anmeldenummer: 25216117.9
(22) Anmeldetag: 17.11.2025
(51) Int. Cl.: F16D 65/12

(54) **VERFAHREN ZUM BESCHICHTEN EINER BREMSSCHEIBE AUS GRAUGUSS ODER STAHL**

(30) Priorität: 02.12.2024 DE 102024135705
(71) Anmelder: Volkswagen Aktiengesellschaft, 38440 Wolfsburg (DE)
(72) Erfinder: Behm, Fabian, 38440 Wolfsburg (DE); Schöwe, Sebastian, 38440 Wolfsburg (DE); Zimmermann, Jason, 38440 Wolfsburg (DE)

(57) **Zusammenfassung**

Die Erfindung betrifft ein Verfahren zum Beschichten einer Bremsscheibe (1) aus Grauguss oder Stahl, wobei die Bremsscheibe (1) einen Grundkörper und wenigstens einen sich davon senkrecht zu einer Drehachse (D) der Bremsscheibe (1) radial erstreckenden, scheibenartigen Körper (11) mit einer Fläche (11a) aufweist, deren Flächennormale parallel zur Drehachse (D) ist. Der scheibenartige Körper (11) bestimmt einen Außendurchmesser (d1) der Bremsscheibe (1), wobei der Außendurchmesser (d1) ein radial äußeres Übermaß (Ü1) gegenüber einem Soll-Außendurchmesser (d2) aufweist. Auf die Fläche (11a) des scheibenartigen Körpers (11) wird durch ein Werkzeug (13) im Laserauftragsschweißen eine Beschichtung (B) aufgebracht wird, die aus einer ersten, auf die Fläche (11a) des scheibenartigen Körpers (11) aufgebrachten Schicht (B1) aus Edelstahl und aus wenigstens einer zweiten, auf die erste Schicht (B1) aufgebrachten Schicht (B2) besteht, die ein Verbund aus einer Eisenlegierungsmatrix mit eingelagerten Hartpartikeln ist.

Erfindungsgemäß wird vorgeschlagen, dass die Beschichtung (B) durchgeführt wird, ohne dass zuvor ein Bearbeitungsvorgang erfolgt, durch den der Außendurchmesser (d1) der Bremsscheibe (1) auf den Soll-Außendurchmesser (d2) verringert wird

## Beschreibung

Die Erfindung betrifft ein Verfahren zum Beschichten einer Bremsscheibe aus Grauguss oder Stahl mit den Merkmalen vom Oberbegriff des Patentanspruchs 1.

Die Beschichtung von Bremsscheiben soll dem Zweck dienen, beim Bremsen von Kraftfahrzeugen erzeugte Feinstaubemissionen spürbar zu senken und dadurch die Umwelt so wenig wie möglich zu belasten. Bei Erprobungen erfolgt die Herstellung derartiger Bremsscheiben bislang in der Weise, dass angelieferte Bremsscheiben (Rohlinge) zunächst hinsichtlich ihres Außendurchmessers auf ein vorgegebenes Fertig- oder Sollmaß gedreht werden. Anschließend erfolgt die Beschichtung der Fläche oder der Flächen des scheibenartigen Körpers. Dabei wird zunächst eine Schicht aus Edelstahl aufgebracht, die wiederum mit einer Schicht aus einem Verbund aus einer Eisenlegierungsmatrix mit eingelagerten Hartpartikeln beschichtet wird. Beide Schichten werden mit Hilfe des Laserauftragsschweißens auf das jeweilige Substrat aufgebracht.

Bei der Beschichtung wird das Werkzeug, durch welches sowohl das Beschichtungsmaterial als auch der Laserstrahl auf das zu beschichtende Substrat gerichtet werden, radial über das Substrat bewegt. Wird das Werkzeug radial von innen nach außen bewegt, so wird es beim Auftrag der ersten Schicht bis zum Außendurchmesser der Bremsscheibe verfahren. Entsprechend erfolgt das Auftragen der zweiten Schicht ebenfalls durch das Verfahren des Werkzeugs bis zum Außendurchmesser der Bremsscheibe.

Es hat sich in Versuchen herausgestellt, dass durch diese Verfahrensweise eine Wärmestau im Randbereich der Bremsscheibe entsteht. Dies ist mit einer starken lokalen Temperaturerhöhung verbunden, was zu einer Verringerung der Beschichtungsqualität im Randbereich führt.

Aus der US 10 274 032 B2 ist ein Verfahren zur Herstellung einer Bremsscheibe für ein Fahrzeug bekannt. Das Verfahren umfasst zunächst das Aufheizen der Bremsscheibe und das anschließende Eintauchen in eine aufgeschmolzene Metalllegierung, wie eine Aluminium- oder Zinklegierung. Die auf die gesamte Bremsscheibe aufgebrachte Metallschicht hat die Funktion sowohl eines Haftvermittlers als auch eines Rostschutzes. Anschließend wird die Bremsscheibe auf die geforderten Sollmaße gebracht. Zuletzt wird auf die Reibflächen der Bremsscheibe mittels Hochgeschwindigkeitsflammspritzen ein Hartmetallpulver, welches Wolfram- oder Titancarbid enthalten kann, aufgebracht.

Der vorliegenden Erfindung liegt die Aufgabe zu Grunde, ein Verfahren zum Beschichten einer Bremsscheibe aus Grauguss oder Stahl vorzuschlagen, mit dem eine Verbesserung der Beschichtungsqualität der Bremsscheibe erzielbar ist.

Diese Aufgabe wird durch ein Verfahren mit den Merkmalen von Patentanspruch 1 gelöst. Vorteilhafte Aus- beziehungsweise Weiterbildungen der Erfindung sind abhängigen Ansprüchen zu entnehmen.

Die Erfindung geht aus von einem Verfahren zum Beschichten einer Bremsscheibe aus Grauguss oder Stahl. Die zu beschichtende Bremsscheibe weist einen Grundkörper und wenigstens einen sich davon senkrecht zu einer Drehachse der Bremsscheibe radial erstreckenden, scheibenartigen Körper mit einer Fläche auf, deren Flächennormale parallel zur Drehachse ist. Dabei bestimmt der scheibenartige Körper einen Außendurchmesser der Bremsscheibe. Der Außendurchmesser weist ein radial äußeres Übermaß gegenüber einem Soll-Außendurchmesser auf. Auf die Fläche des scheibenartigen Körpers wird durch ein Werkzeug im Laserauftragsschweißen eine Beschichtung aufgebracht. Die Beschichtung besteht aus einer ersten, auf die Fläche des scheibenartigen Körpers aufgebrachten Schicht aus Edelstahl und aus wenigstens einer zweiten, auf die erste Schicht aufgebrachten Schicht, welche ein Verbund aus einer Eisenlegierungsmatrix mit eingelagerten Hartpartikeln ist. Durch die zweite Schicht wird später im Montagezustand der Bremsscheibe am Kraftfahrzeug eine Reibfläche zur Anlage der Bremsbeläge bereitgestellt.

Der Edelstahl kann bevorzugt ein austenitischer oder ferritischer Edelstahl sein. Beispielsweise ist denkbar, dass die erste Schicht aus einem austenitischen Chrom-Nickel-Molybdän-Stahl besteht, welcher solche Werkstoffeigenschaften aufweist, wie sie dem Werkstoff 1.4404 nach der Norm EN10027-2 oder dem Werkstoff 316L nach der Norm AISI entsprechen. Je nach Werkstoffeigenschaften der Bremsscheibe ist es jedoch alternativ denkbar und hat sich als vorteilhaft erwiesen, wenn die erste Schicht aus einem ferritischen Edelstahl besteht, welcher solche Werkstoffeigenschaften aufweist, wie sie dem Werkstoff 1.4016 nach der Norm DIN EN 10027-2 oder dem Werkstoff 430L nach der Norm AISI entsprechen.

Die zweite Schicht weist eine Eisenlegierungsmatrix auf, welche ebenfalls bevorzugt aus den oben genannten Werkstoffen 316L oder 430L besteht. Die Hartpartikel können bevorzugt aus einer Legierung von Titancarbid und Ferrochrom (TiC-FeCr) oder auch nur aus Titancarbid oder Wolframcarbid bestehen.

Die Erfindung schlägt nun vor, dass die Beschichtung durchgeführt wird, ohne dass zuvor ein solcher Bearbeitungsvorgang erfolgt, durch den der Außendurchmesser der Bremsscheibe auf den Soll-Außendurchmesser verringert wird.

Ein vorheriger Bearbeitungsvorgang der Bremsscheibe, auch ein solcher des Außendurchmessers ist als grundsätzlich nicht von vornherein ausgeschlossen, solange durch den Bearbeitungsvorgang der Außendurchmesser der Bremsscheibe nicht auf den Soll-Außendurchmesser verringert wird.

Durch diese Verfahrensweise wird die Voraussetzung dafür geschaffen, dass die Beschichtungsqualität der Bremsscheibe, insbesondere in deren äußeren Randbereich spürbar verbessert werden kann. Es wird auf diese Weise die Beschichtung nicht in einem äußeren Kantenbereich beendet, mit der Folge, dass dort kein nennenswerter Wärmestau und keine lokale Temperaturerhöhung stattfinden. Hierdurch können somit das Auftreten einer Aufkohlung der ersten Schicht sowie das Auftreten von Anbindungsfehlern vermieden werden.

Nach einer Weiterbildung wird vorgeschlagen, dass eine Bremsscheibe mit einem radial äußeren Übermaß in einem Bereich von etwa 1,5 mm bis etwa 5,0 mm, bevorzugt in einem Bereich von etwa 2,0 bis etwa 3,0 mm und besonders bevorzugt mit einem radial äußeren Übermaß in Höhe von etwa 2,5 mm verwendet wird.

Es hat sich gezeigt, dass bei einer Wahl eines derartigen Übermaßes ein sehr guter Mittelweg zwischen erzielbarer Prozessverbesserung und Materialaufwand möglich ist.

Nach einer Ausbildung des Erfindungsgedankens wird beim Aufbringen der Beschichtung durch Laserauftragsschweißen das Werkzeug so weit radial über das jeweils zu beschichtende Substrat bewegt, dass ein Außendurchmesser eines durch das Werkzeug erzeugten Laserstrahls an den Außendurchmesser der Bremsscheibe gerade angrenzt. Mit anderen Worten überragt der Laserstrahl bzw. der auf dem Substrat erzeugte Laserspot den Außendurchmesser der Bremsscheibe nicht.

Auf diese Weise kann vermieden werden, dass der Laserstrahl im Randbereich der Bremsscheibe unkontrolliert in Teile der Beschichtungsanlage gelangt. Einer Beschädigung der Anlage durch den hochenergetischen Laserstrahl kann dadurch vorgebeugt werden.

Gemäß einer anderen Weiterbildung wird die zweite Schicht durch Schleifen bearbeitet. Durch den Prozess des Laserauftragsschweißens wird eine sehr harte, verrußte und raue Oberfläche auf der zweiten Schicht erzeugt. Eine solche Oberfläche würde den Bremsbelägen beim Bremsvorgang schaden. Durch einen Schleifvorgang, insbesondere mit Diamantbestückung des Schleifwerkzeugs kann eine geeignete Oberflächenbeschaffenheit erzeugt werden.

Nach einer höchst vorteilhaften Ausbildung wird der scheibenartige Körper vor oder nach dem Schleifen durch Drehen bearbeitet und dadurch sein Außendurchmesser auf den Soll-Außendurchmesser verringert. Das Drehen des Außendurchmessers auf Sollmaß erfolgt also in jedem Fall erst nach der Beschichtung der Fläche des scheibenartigen Körpers. Dadurch werden mehrere positive Effekte erzielt:
- Es kann ein sogenannter Overspray aus dem Beschichtungsprozess entfernt werden. Als Overspray wird ein radial neben der beschichteten Fläche (Reibfläche) liegender Bereich der Bremsscheibe verstanden, auf den erhitzte Hartpartikel beim Aufbringen der zweiten Schicht durch das Laserauftragsschweißen auftreffen und auf diesem haften bleiben bzw. einschmelzen. Durch die Entfernung des Oversprays wird die spätere Lackierbarkeit der an die Beschichtung angrenzenden Flächen mit einem Korrosionsschutzmittel verbessert.
- Der Übergangsbereich an der Kante der Reibfläche (Übergang vom scheibenartigen Körper mit Grauguss oder Stahl auf die Beschichtung) kann zusätzlich mit einer Fase versehen werden. Dies wirkt sich wiederum positiv auf die Kerbwirkung aus. Des Weiteren wird dadurch auch die Lackierbarkeit des Übergangsbereichs mit einem Korrosionsschutzmittel erleichtert.

Eine Weiterbildung schlägt vor, dass eine Bremsscheibe verwendet wird, bei der der Grundkörper mit dem scheibenartigen Körper über eine muldenartige Vertiefung verbunden ist. Dabei ist ein Innendurchmesser des scheibenartigen Körpers gegenüber einem Soll-Innendurchmesser für den Innendurchmesser mit einem radial inneren Übermaß versehen. Das Übermaß kann in einem Bereich von etwa 1,5 bis 5 mm, bevorzugt in einem Bereich von 2 bis 3 mm liegen.

Durch diese Verfahrensweise wird der Vorteil erzielt, dass die Beschichtungsqualität der Bremsscheibe auch in deren inneren Randbereich spürbar verbessert werden kann. Insbesondere wird auf diese Weise die Beschichtung ebenfalls nicht in einem Kantenbereich (Übergang Reibfläche/muldenartige Vertiefung) beendet, mit der Folge, dass kein nennenswerter Wärmestau und keine lokale Temperaturerhöhung stattfinden.

Damit beim Aufbringen der Beschichtung ein Overspray im Bereich der muldenartigen Vertiefung verringert werden kann, wird beim Laserauftragsschweißen das Beschichtungswerkzeug so weit radial über das jeweils zu beschichtende Substrat bewegt, dass ein Außendurchmesser eines erzeugten Laserstrahls an einen Innendurchmesser des scheibenartigen Körpers gerade angrenzt. Mit anderen Worten überragt der Laserstrahl bzw. der dadurch auf dem Substrat erzeugte Laserspot den Innendurchmesser des scheibenartigen Körpers nicht.

Schließlich sieht eine Weiterbildung des Verfahrens noch vor, dass der scheibenartige Körper vor oder nach dem Schleifen durch Drehen bearbeitet und dadurch sein Innendurchmesser auf den Soll-Innendurchmesser vergrößert wird. Hierdurch kann eventuell in der muldenartigen Vertiefung noch vorhandener Overspray entfernt werden, was wiederum die Aufbringung eines Korrosionsschutzmittels erleichtert.

Anzumerken ist, dass durch beim Drehvorgang vorteilhafterweise der gesamte, muldenartige Bereich ausgedreht und dadurch nicht nur der Overspray, sondern ein in diesem Bereich vorhandenes Übermaß auf Sollmaß gebracht wird.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Merkmale und Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: einen Rohling einer Bremsscheibe, wie er für das Verfahren verwendet wird,
- Fig. 2: eine Darstellung des Verfahrens bei einer radialen Bewegung des Werkzeugs von innen nach außen, bis äußeren Randbereich der Bremsscheibe,
- Fig. 3: eine Darstellung des Verfahrens bei einer radialen Bewegung des Werkzeugs von außen nach innen, bis zum inneren Randbereich des scheibenartigen Körpers der Bremsscheibe und
- Fig. 4: eine Darstellung einer möglichen Bearbeitung der bereits beschichteten Bremsscheibe.

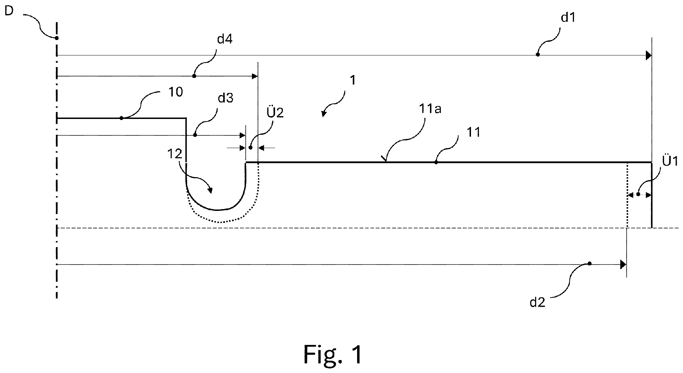

In Fig. 1 ist der Rohling einer Bremsscheibe 1 dargestellt, die als Ausgangspunkt für das Verfahren verwendet wird. Die Bremsscheibe 1 ist aus Grauguss hergestellt. Sie weist einen nabenartigen Grundkörper 10 auf. Von dem Grundkörper 10 erstreckt sich radial ein scheibenartiger Körper 11. Von der Bremsscheibe 1 ist aus Symmetriegründen sowohl vertikal als auch horizontal nur eine Hälfte dargestellt.

Der Grundkörper 10 dient zur Befestigung der Bremsscheibe 1 an einem nicht dargestellten Radträger eines Kraftfahrzeugs. Der Grundkörper 10 ist über eine muldenartige Vertiefung 12, welche als Wärmeausgleichsnut dient, mit dem scheibenartigen Körper 11 verbunden. Der scheibenartige Körper 11 weist eine Fläche 11a auf, deren Flächennormale parallel zu einer Drehachse D der Bremsscheibe 1 ist. Da horizontal nur eine Hälfte der Bremsscheibe 1 dargestellt ist, existiert also noch eine weitere, der Fläche 11a gegenüberliegende Fläche des scheibenartigen Körpers 11. Für diese gilt das im Folgenden beschriebene Verfahren ebenfalls.

Die Bremsscheibe 1 weist einen Außendurchmesser d1 auf. Des Weiteren ist ein Soll-Außendurchmesser d2 gestrichelt eingezeichnet. Der Rohling der Bremsscheibe 1 weist also hinsichtlich des Soll-Außendurchmessers ein Übermaß Ü1 auf.

Ferner weist der scheibenartige Körper 11 einen Innendurchmesser d3 auf. Ebenfalls gestrichelt dargestellt ist ein Soll-Innendurchmesser d4. Der Rohling der Bremsscheibe 1 weist daher hinsichtlich des Soll-Innendurchmessers des scheibenartigen Körpers 11 ebenfalls ein Übermaß Ü2 auf.

Das radial äußere Übermaß Ü1 liegt in einem Bereich von etwa 1,5 mm bis etwa 5,0 mm. Bevorzugt liegt es in einem Bereich von etwa 2,0 bis etwa 3,0 mm. Besonders bevorzugt wird eine Bremsscheibe 1 mit einem radial äußeren Übermaß Ü1 in Höhe von etwa 2,5 mm verwendet. Das radial innere Übermaß Ü2 kann ebenfalls in einem Bereich von etwa 1,5 bis etwa 5,0 mm, bevorzugt in einem Bereich von etwa 2,0 bis etwa 3,0 mm liegen.

Dieser Rohling einer Bremsscheibe 1 wird nun einer Beschichtung im Laserauftragsschweißen unterzogen, bei dem die Fläche 11a des scheibenartigen Körpers 11 mit einer aus zwei Schichten bestehenden Beschichtung versehen wird.

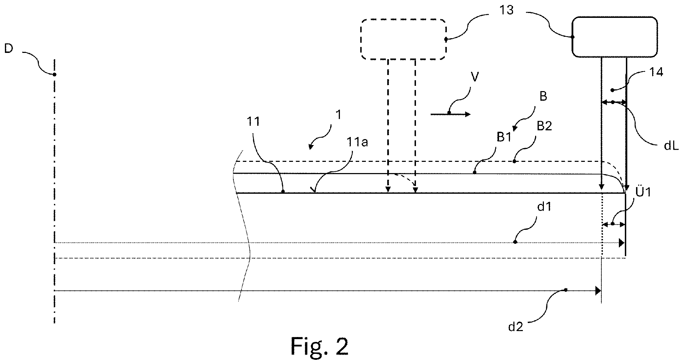

In der Figur 2 ist eine Phase des Beschichtungsverfahrens dargestellt, bei dem die Beschichtung der Fläche 11a durch ein Werkzeug 13 erfolgt. Durch das Werkzeug 13 wird ein Laserstrahl 14, dem ebenfalls das Beschichtungsmaterial zugeführt wird (nicht dargestellt) auf das jeweilige Substrat gerichtet. Das Werkzeug 13 bewegt sich im Ausführungsbeispiel mit einer Vorschubgeschwindigkeit V radial bevorzugt von innen nach außen (vgl. gestrichelte Darstellung). Dabei wird zunächst eine erste Schicht B1 auf die Oberfläche 11a aufgebracht.

Die erste Schicht B1 besteht aus Edelstahl. Dieser kann bevorzugt ein austenitischer oder ferritischer Edelstahl sein. Beispielsweise ist denkbar, dass die erste Schicht aus einem austenitischen Chrom-Nickel-Molybdän-Stahl besteht, welcher solche Werkstoffeigenschaften aufweist, wie sie dem Werkstoff 1.4404 nach der Norm EN10027-2 oder dem Werkstoff 316L nach der Norm AISI entsprechen. Je nach Werkstoffeigenschaften der Bremsscheibe ist es jedoch alternativ denkbar und hat sich als vorteilhaft erwiesen, wenn die erste Schicht aus einem ferritischen Edelstahl besteht, welcher solche Werkstoffeigenschaften aufweist, wie sie dem Werkstoff 1.4016 nach der Norm DIN EN 10027-2 oder dem Werkstoff 430L nach der Norm AISI entsprechen.

Des Weiteren ist das Werkzeug 13 am Ende der Beschichtung der Fläche 11a mit der ersten Schicht B1 dargestellt. Hierbei ist erkennbar, dass das Werkzeug 13 radial nur so weit nach außen bewegt wird, dass ein Außendurchmesser dL des Laserstrahls 14 und damit ein von diesem erzeugter Laserspot gerade bis an den Außendurchmesser d1 der Bremsscheibe 1 angrenzt. Auf diese Weise wird wirksam vermieden, dass der Laserstrahl 14 unkontrolliert an andere Stellen gelangen und dort Beschädigungen hervorrufen kann. Außerdem wird dadurch auch ein Overspray reduziert.

Entsprechend wird im Anschluss daran bei der Beschichtung der ersten Schicht B1 mit der zweiten Schicht B2 (gestrichelt angedeutet) verfahren. Auch hierbei verfährt das Beschichtungswerkzeug 13 radial von innen nach außen. Durch die erste und die zweite Schicht B1 und B2 wird eine Beschichtung B gebildet.

Die zweite Schicht B2 weist eine Eisenlegierungsmatrix auf, welche ebenfalls bevorzugt aus den bereits genannten Werkstoffen 316L oder 430L besteht. Die Hartpartikel können bevorzugt aus einer Legierung von Titancarbid und Ferrochrom (TiC-FeCr) oder auch nur aus Titancarbid oder Wolframcarbid bestehen.

Auch bei der Beschichtung mit der zweiten Schicht B2 verfährt das Werkzeug 13 nur so weit radial nach außen, dass ein Außendurchmesser dL des Laserstrahls 14 und damit ein von diesem erzeugter Laserspot gerade bis an den Außendurchmesser d1 der Bremsscheibe 1 angrenzt.

Ferner ist erkennbar, dass im Bereich des Laserstrahls 14 die Dicken der Schichten B1 und B2 jeweils kontinuierlich bis zum Außendurchmesser d2 abnehmen. Dieser Bereich der in der Dicke abnehmenden Beschichtung B befindet sich, bedingt durch das Übermaß Ü1, lediglich radial außerhalb des angestrebten Soll-Außendurchmessers d2. Auf diese Weise wirkt sich dies nicht nachteilig auf die Qualität der Beschichtung B im späteren "Arbeitsbereich" der Bremsscheibe 1 auf. Im Gegenteil, die Dicke der Beschichtung B kann bis zum Soll-Außendurchmesser d2 kontinuierlich beibehalten werden.

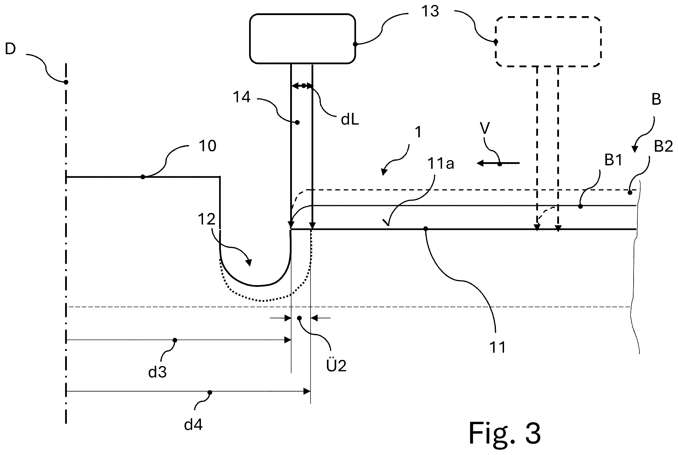

In der Fig. 3 ist ein Ausführungsbeispiel dargestellt, bei dem sich das Werkzeug 13 bei der Aufbringung der Beschichtung B mit einer Vorschubgeschwindigkeit V radial von außen nach innen bewegt (gestrichelt dargestellt). Hierbei ist ersichtlich, dass das Werkzeug 13 am Ende der Beschichtung jeweils nur so weit verfahren wird, dass ein Außendurchmesser dL und damit auch ein erzeugter Laserspot des Laserstrahls 14 gerade bis an den Innendurchmesser d3 des scheibenartigen Körpers 11 angrenzt, diesen also nicht überragt. Hiermit ist der Vorteil verbunden, dass deutlich weniger Overspray in den muldenartigen Bereich 12 gelangt.

Es ist auch erkennbar, dass im Bereich des Laserstrahls 14 die Dicken der Schichten B1 und B2 wiederum kontinuierlich abnehmen. Dieser Bereich der in der Dicke abnehmenden

Beschichtung B befindet sich, bedingt durch das Übermaß Ü2, lediglich radial außerhalb des angestrebten Soll-Innendurchmessers d4. Auf diese Weise wirkt sich dies ebenfalls nicht nachteilig auf die Qualität der Beschichtung B im späteren "Arbeitsbereich" der Bremsscheibe 1 auf. Die Dicke der Beschichtung B kann somit bis zum Soll-Innendurchmesser d4 kontinuierlich beibehalten werden.

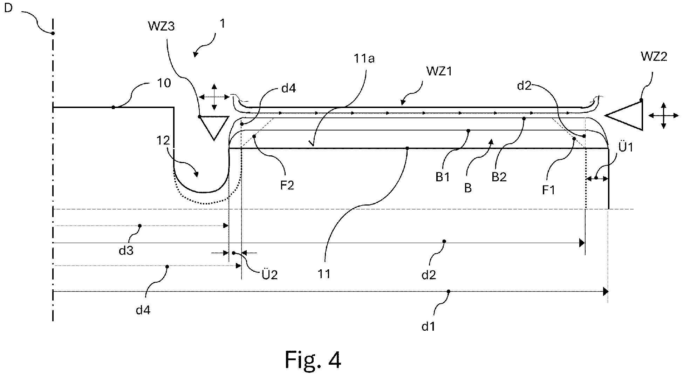

In der Fig. 4 ist dargestellt, wie die mit der Beschichtung B versehene Bremsscheibe 1 weiterbearbeitet werden kann:
So ist es denkbar, dass die zweite Schicht B2 mittels eines geeigneten Schleifwerkzeugs WZ1 durch Schleifen bearbeitet wird. Durch das Schleifen kann die sehr harte, raue und rußige Oberfläche der zweiten Schicht B2 auf eine solche Oberflächenqualität gebracht werden, die für den Kontakt mit Bremsbelägen geeignet ist.

Nach oder vor dem Schleifen kann die beschichtete Bremsscheibe 1 noch einem Drehprozess unterzogen werden. Hierbei kann durch ein Drehwerkzeug WZ2 der Außendurchmesser d1 auf den Soll-Außendurchmesser d2 abgedreht werden. Hierdurch kann eventuell bestehender Overspray im Bereich des Außendurchmessers d1 beseitigt werden. Im Anschluss daran ist es möglich, gleich eine Fase F1 (gestrichelt angedeutet) in den Übergangsbereich vom scheibenartigen Körper 11 zur Beschichtung B einzuarbeiten.

Im Bereich des Innendurchmessers d3 kann mit einem Drehwerkzeug WZ3 der Innendurchmesser d3 auf den Soll-Innendurchmesser d4 gebracht werden. Dabei wird bevorzugt der überwiegende Teil der muldenartigen Vertiefung 12 ausgedreht. Hierdurch kann eventuell bestehender Overspray im Bereich der muldenartigen Vertiefung 12 beseitigt werden. Im Anschluss daran ist es möglich, gleich eine Fase F2 (gestrichelt angedeutet) in den Übergangsbereich vom scheibenartigen Körper 11 zur Beschichtung B einzuarbeiten.

Durch die Fasen F1, F2 kann die Kerbwirkung an diesen Stellen verringert und die Eignung zum Aufbringen eines Korrosionsschutzmittels verbessert werden.

### Bezugszeichenliste

- 1: Bremsscheibe
- 10: Grundkörper
- 11: scheibenartiger Körper
- 11a: Fläche
- 12: muldenartige Vertiefung
- 13: Werkzeug
- 14: Laserstrahl

- B: Beschichtung
- B1: erste Schicht
- B2: zweite Schicht
- d1: Außendurchmesser
- d2: Soll-Außendurchmesser
- d3: Innendurchmesser
- d4: Soll-Innendurchmesser
- dL: Außendurchmesser Laserstrahl
- D: Drehachse
- F1, F2: Fasen
- V: Vorschubgeschwindigkeit
- Ü1: Übermaß
- Ü2: Übermaß
- WZ1: Schleifwerkzeug
- WZ2: Drehwerkzeug
- WZ3: Drehwerkzeug

## Patentansprüche

1. Verfahren zum Beschichten einer Bremsscheibe (1) aus Grauguss oder Stahl, wobei die Bremsscheibe (1) einen Grundkörper (10) und wenigstens einen sich davon senkrecht zu einer Drehachse (D) der Bremsscheibe (1) radial erstreckenden, scheibenartigen Körper (11) mit einer Fläche (11a) aufweist, deren Flächennormale parallel zur Drehachse (D) ist, wobei der scheibenartige Körper (11) einen Außendurchmesser (d1) der Bremsscheibe (1) bestimmt und der Außendurchmesser (d1) ein radial äußeres Übermaß (Ü1) gegenüber einem Soll-Außendurchmesser (d2) aufweist, wobei auf die Fläche (11a) des scheibenartigen Körpers (11) durch ein Werkzeug (13) im Laserauftragsschweißen eine Beschichtung (B) aufgebracht wird, die aus einer ersten, auf die Fläche (11a) des scheibenartigen Körpers (11) aufgebrachten Schicht (B1) aus Edelstahl und aus wenigstens einer zweiten, auf die erste Schicht (B1) aufgebrachten Schicht (B2) besteht, die ein Verbund aus einer Eisenlegierungsmatrix mit eingelagerten Hartpartikeln ist, **dadurch gekennzeichnet, dass** die Beschichtung (B) durchgeführt wird, ohne dass zuvor ein solcher Bearbeitungsvorgang erfolgt, durch den der Außendurchmesser (d1) der Bremsscheibe (1) auf den Soll-Außendurchmesser (d2) verringert wird.

2. Verfahren nach Anspruch 1, **dadurch gekennzeichnet, dass** eine Bremsscheibe (1) mit einem radial äußeren Übermaß (Ü1) in einem Bereich von 1,5 mm bis 5,0 mm, bevorzugt in einem Bereich von 2,0 bis 3,0 mm und besonders bevorzugt mit einem radial äußeren Übermaß (Ü1) in Höhe von 2,5 mm verwendet wird.

3. Verfahren nach einem der vorhergehenden Ansprüche, **dadurch gekennzeichnet, dass** beim Aufbringen der Beschichtung (B) durch Laserauftragsschweißen das Werkzeug (13) so weit radial über das jeweils zu beschichtende Substrat bewegt wird, dass ein Außendurchmesser (dL) eines durch das Werkzeug (13) erzeugten Laserstrahls (14) an den Außendurchmesser (d1) der Bremsscheibe (1) gerade angrenzt.

4. Verfahren nach einem der vorhergehenden Ansprüche, **dadurch gekennzeichnet, dass** die zweite Schicht (B2) durch Schleifen bearbeitet wird.

5. Verfahren nach dem vorhergehenden Anspruch, **dadurch gekennzeichnet, dass** der scheibenartige Körper (11) vor oder nach dem Schleifen durch Drehen bearbeitet und dadurch sein Außendurchmesser (d1) auf den Soll-Außendurchmesser (d2) verringert wird.

6. Verfahren nach einem der vorhergehenden Ansprüche, **dadurch gekennzeichnet, dass** eine Bremsscheibe (1) verwendet wird, bei der der Grundkörper (10) mit dem scheibenartigen Körper (11) über eine muldenartige Vertiefung (12) verbunden ist, wobei ein Innendurchmesser (d3) des scheibenartigen Körpers (11) gegenüber einem Soll-Innendurchmesser (d4) mit einem radial inneren Übermaß (Ü2) versehen ist.

7. Verfahren nach dem vorhergehenden Anspruch, **dadurch gekennzeichnet, dass** beim Aufbringen der Beschichtung (B) durch Laserauftragsschweißen das Werkzeug (13) so weit radial über das jeweils zu beschichtende Substrat bewegt wird, dass ein Außendurchmesser (dL) eines durch das Werkzeug (13) erzeugten Laserstrahls (14) an den Innendurchmesser (d3) des scheibenartigen Körpers (11) gerade angrenzt.

8. Verfahren nach einem der Ansprüche 6 und 7, **dadurch gekennzeichnet, dass** der scheibenartige Körper (11) vor oder nach dem Schleifen durch Drehen bearbeitet und dadurch sein Innendurchmesser (d3) auf den Soll-Innendurchmesser (d4) vergrößert wird.
